# EUROPEAN PATENT APPLICATION

(11) **EP 4 818 262 A1**
(43) Date of publication of application: **07.10.2026**
(21) Application number: 24897944.5
(22) Date of filing: 07.11.2024
(51) Int. Cl.: C08L 69/00, C08L 25/12, C08L 51/04, C08L 23/08, C08L 63/00, C08K 5/52, C08K 7/14, H01M 50/256

(54) **THERMOPLASTIC RESIN COMPOSITION AND MOLDED ARTICLE PRODUCED THEREFROM**

(30) Priority: 29.11.2023 KR 20230168924
(71) Applicant: LOTTE CHEMICAL CORPORATION, Seoul 05551 (KR)
(72) Inventor: LEE, Su Yeon, Uiwiang-si Gyeonggi-do 16073 (KR); KANG, Tae Gon, Uiwiang-si Gyeonggi-do 16073 (KR); PARK, Sang Ki, Uiwiang-si Gyeonggi-do 16073 (KR); CHOI, Ki Hong, Uiwiang-si Gyeonggi-do 16073 (KR)
(74) Representative: Germain Maureau
(86) International application number: PCT/KR2024/017521
(87) International publication number: WO 2025/116348

(57) **Abstract**

A thermoplastic resin composition of the present invention comprises: approximately 100 parts of a polycarbonate resin; approximately 20-40 parts of an aromatic vinyl-vinyl cyanide-based copolymer resin; approximately 3-15 parts by weight of a rubber-modified vinyl-based graft copolymer in which a monomer mixture comprising an aromatic vinyl-based monomer and an alkyl (meth)acrylic monomer is graft copolymerized onto a rubber polymer; approximately 0.7-3 parts by weight of an ethylene-methyl acrylate copolymer; approximately 20-50 parts of a glass fiber; approximately 10-40 parts by weight of a brominated epoxy resin; and approximately 0.5-3 parts by weight of an aromatic phosphate compound containing a resorcinol-derived unit. The thermoplastic resin composition has excellent impact resistance, rigidity, flame retardancy, heat resistance, moldability, property balance therebetween, and the like.

## Description

### [Technical Field]

The present invention relates to a thermoplastic resin composition and a molded article produced therefrom. More particularly, the present invention relates to a thermoplastic resin composition excellent in impact resistance, rigidity, flame retardancy, heat resistance, moldability, balance of properties thereof, and the like, and a molded article produced therefrom.

### [Background Art]

Thermoplastic resin compositions are useful for use as housings of electric/electronic products, interior/exterior materials of automobiles, and exterior materials for construction due to a lower specific gravity than glass and metal and excellence in moldability, impact resistance, and the like. In particular, a thermoplastic resin composition prepared by mixing a polycarbonate (PC) resin with an aromatic vinyl-vinyl cyanide copolymer resin, such as an acrylonitrile-butadienestyrene (ABS) copolymer resin, is used in various applications due to the ability to improve processability and chemical resistance and to achieve cost reduction without deterioration in impact resistance and heat resistance of the polycarbonate resin.

Driven by demand for eco-friendly solutions, sales of electric vehicles (EVs) are on the rise, with global sales projected to reach approximately 35 million units by 2030. As the EV market grows, EV manufacturing plants are being established worldwide, including in Europe, the Americas, and China, and battery manufacturers are also constructing facilities near these EV plants to supply batteries required for EVs. EV batteries are mounted in EVs in the order of cell → module → pack, leading to increasing demand for trays in production lines for battery pack assembly. Materials for these battery trays must exhibit high flame retardancy and heat resistance to prevent fire due to thermal runaway, as well as high impact resistance and rigidity to prevent damage during movement during assembly.

Therefore, there is a need for a thermoplastic resin composition excellent in impact resistance, rigidity, flame retardancy, heat resistance, moldability, balance of properties thereof, and the like,

The background art of the present invention is disclosed in Korean Registered Patent No. 10-1914875 and the like.

### [Disclosure]

### [Technical Problem]

It is one object of the present invention to provide a thermoplastic resin composition excellent in impact resistance, rigidity, flame retardancy, heat resistance, moldability, balance of properties thereof, and the like.

It is another object of the present invention to provide a molded article formed of the thermoplastic resin composition.

The above and other objects of the present invention can all be achieved by the present invention as described below.

### [Technical Solution]

1. One aspect of the present invention relates to a thermoplastic resin composition. The thermoplastic resin composition comprises: about 100 parts by weight of a polycarbonate resin; about 20 parts by weight to about 40 parts by weight of an aromatic vinyl-vinyl cyanide copolymer resin; about 3 parts by weight to about 15 parts by weight of a rubber-modified vinyl graft copolymer prepared by graft polymerization of a monomer mixture comprising an aromatic vinyl monomer and an alkyl (meth)acrylate monomer onto a rubber polymer; about 0.7 parts by weight to about 3 parts by weight of an ethylene-methyl acrylate copolymer; about 20 parts by weight to about 50 parts by weight of glass fiber; about 10 parts by weight to about 40 parts by weight of a brominated epoxy resin; and about 0.5 parts by weight to about 3 parts by weight of an aromatic phosphate compound comprising a resorcinol-derived unit.
2. In embodiment 1, the glass fiber may be subjected to surface treatment with an epoxy sizing agent.
3. In embodiment 1 or 2, the brominated epoxy resin may have a bromine content of about 20 wt% to about 80 wt%.
4. In embodiments 1 to 3, the brominated epoxy resin may have a weight average molecular weight (Mw) of about 15,000 g/mol to about 25,000 g/mol, as measured by gel permeation chromatography (GPC).
5. In embodiments 1 to 4, the aromatic phosphate compound comprising the resorcinol-derived unit may include at least one of resorcinol-di(bis-2,6-dimethylphenyl) phosphate, resorcinol bis(diphenyl phosphate), and resorcinol di[bis(2,4-di-tert-butylphenyl) phosphate].
6. In embodiments 1 to 5, a weight ratio of the rubber-modified vinyl graft copolymer to the ethylene-methyl acrylate copolymer may range from about 1:0.1 to about 1:0.7.
7. In embodiments 1 to 6, a weight ratio of the brominated epoxy resin to the aromatic phosphate compound may range from about 1:0.02 to about 1:0.25.
8. In embodiments 1 to 7, the thermoplastic resin composition may have a notched Izod impact strength of about 3.7 kgf·cm/cm to about 20 kgf·cm/cm, as measured on a 1/8" thick specimen in accordance with ASTM D256.
9. In embodiments 1 to 8, the thermoplastic resin composition may have a falling dart impact (FDI) strength of about 7 J to about 20 J, as measured on a 3.2 mm thick specimen by dropping a 7 kg dart from a height of 1 m in accordance with the DuPont drop test method.
10. In embodiments 1 to 9, the thermoplastic resin composition may have a tensile strength of about 1,000 MPa to about 2,000 MPa, as measured on a 4 mm thick specimen under conditions of 5 mm/min in accordance with ISO 527.
11. In embodiments 1 to 10, the thermoplastic resin composition may have a flame retardancy of V-1 or higher, as measured on a 1.5 mm thick injection-molded specimen using the UL-94 vertical flame retardancy test method.
12. In embodiments 1 to 11, the thermoplastic resin composition may have a heat deflection temperature (HDT) of about 115°C to about 160°C, as measured on a 6.4 mm thick specimen under conditions of 1.82 MPa and a heating rate of 120°C/hr in accordance with ASTM D648.
13. In embodiments 1 to 12, the thermoplastic resin composition may have a spiral flow length of about 200 mm to about 450 mm, as measured on a specimen prepared by injection molding in a spiral mold having a width of 15 mm and a thickness of 2 mm under conditions of a molding temperature of 240°C, a mold temperature of 60°C, an injection pressure of 1,000 MPa, and an injection rate of 60 mm/s.
14. Another aspect of the present invention relates to a molded article. The molded article is formed of the thermoplastic resin composition according to any one of embodiments 1 to 13.
15. A further aspect of the present invention relates to a battery tray. The battery tray is formed of the thermoplastic resin composition according to any one of embodiments 1 to 13 and is an injection-molded article having a size of about 100 mm to about 800 mm × about 100 mm to about 700 mm × about 100 mm to about 500 mm.

### [Advantageous Effects]

Embodiments of the present invention provide a thermoplastic resin composition excellent in impact resistance, rigidity, flame retardancy, heat resistance, moldability, balance of properties thereof, and the like, and a molded article formed therefrom.

### [Best Mode]

Hereinafter, exemplary embodiments of the present invention will be described in detail.

A thermoplastic resin composition according to the present invention comprises: (A) a polycarbonate resin; (B) an aromatic vinyl-vinyl cyanide copolymer resin; (C) a rubber-modified vinyl graft copolymer; (D) an ethylene-methyl acrylate copolymer; (E) glass fiber; (F) a brominated epoxy resin; and (G) an aromatic phosphate compound.

As used herein to represent a specific numerical range, the expression "a to b" means "≥ a and ≤ b".

### (A) Polycarbonate resin

The polycarbonate resin according to one embodiment of the present invention may include a polycarbonate resin used in typical thermoplastic resin compositions. For example, the polycarbonate resin may include an aromatic polycarbonate resin prepared by reacting diphenols (aromatic diol compounds) with a precursor such as phosgene, halogen formate, carbonate diester, and the like.

In some embodiments, examples of the diphenols may include 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may include 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically, 2,2-bis(4-hydroxyphenyl)propane, also referred to as bisphenol-A.

In some embodiments, the polycarbonate resin may include a branched polycarbonate resin. For example, the polycarbonate resin may include a branched polycarbonate resin prepared by adding 0.05 mol% to 2 mol% of a trivalent or higher-valent polyfunctional compound, specifically, a compound containing a trivalent or higher-valent phenol group, based on the total number of moles of the diphenols used in polymerization.

In some embodiments, the polycarbonate resin may be used in the form of a homopolycarbonate resin, a copolycarbonate resin, or a blend thereof. In addition, the polycarbonate resin may be partially or completely replaced with an aromatic polyester-carbonate resin obtained by polymerization in the presence of an ester precursor, such as a bifunctional carboxylic acid.

In some embodiments, the polycarbonate resin may have a weight average molecular weight (Mw) of about 18,000 g/mol to about 50,000 g/mol, for example, about 20,000 g/mol to about 40,000 g/mol, as measured by gel permeation chromatography (GPC). Within this range, the thermoplastic resin composition can be excellent in impact resistance, flowability (processability), and the like.

In some embodiments, the polycarbonate resin may have a melt-flow index (MI) of about 5 g/10 min to about 80 g/10 min, as measured at 300°C under a load of 1.2 kg in accordance with ISO 1133. In addition, the polycarbonate resin may be a mixture of two or more polycarbonate resins having different melt-flow indices.

### (B) Aromatic vinyl-vinyl cyanide copolymer resin

The aromatic vinyl-vinyl cyanide copolymer resin according to one embodiment of the present invention serves to improve properties of the thermoplastic resin composition, such as impact resistance, rigidity, flame retardancy, heat resistance, moldability, balance of properties thereof, and the like, when incorporated in the polycarbonate resin together with the rubber-modified vinyl graft copolymer, the ethylene-methyl acrylate copolymer, the glass fiber, the brominated epoxy resin, the aromatic phosphate compound, and the like. The aromatic vinyl-vinyl cyanide copolymer resin may include an aromatic vinyl-vinyl cyanide copolymer resin used in typical thermoplastic resin compositions. For example, the aromatic vinyl-vinyl cyanide copolymer resin may include a polymer of a monomer mixture comprising an aromatic vinyl monomer and a vinyl cyanide monomer.

In some embodiments, the aromatic vinyl-vinyl cyanide copolymer resin may be obtained by mixing the aromatic vinyl monomer with the vinyl cyanide monomer and the like, followed by polymerization. Here, polymerization of the monomer mixture may be performed by a known polymerization method, such as emulsion polymerization, suspension polymerization, and bulk polymerization.

In some embodiments, examples of the aromatic vinyl monomer may include styrene, α-methylstyrene, β-methylstyrene, p-methylstyrene, p-t-butylstyrene, ethylstyrene, vinylxylene, monochlorostyrene, dichlorostyrene, dibromostyrene, vinylnaphthalene, and the like. These may be used alone or as a mixture thereof. The aromatic vinyl monomer may be present in an amount of about 60 wt% to about 90 wt%, for example, about 65 wt% to about 85 wt%, based on the total weight of the aromatic vinyl-vinyl cyanide copolymer resin. Within this range, the thermoplastic resin composition can be excellent in impact resistance, flowability, appearance, and the like.

In some embodiments, examples of the vinyl cyanide monomer may include acrylonitrile, methacrylonitrile, ethacrylonitrile, phenylacrylonitrile, α-chloroacrylonitrile, fumaronitrile, and the like, without being limited thereto. These may be used alone or as a mixture thereof. For example, the vinyl cyanide monomer may include acrylonitrile, methacrylonitrile, and the like. The vinyl cyanide monomer may be present in an amount of about 10 wt% to about 40 wt%, for example, about 15 wt% to about 35 wt%, based on the total weight of the aromatic vinyl-vinyl cyanide copolymer resin. Within this range, the thermoplastic resin composition can be excellent in impact resistance, flowability, heat resistance, appearance, and the like.

In some embodiments, the aromatic vinyl-vinyl cyanide copolymer resin may have a weight average molecular weight (Mw) of about 10,000 g/mol to about 300,000 g/mol, for example, about 15,000 g/mol to about 150,000 g/mol, as measured by gel permeation chromatography (GPC). Within this range, the thermoplastic resin composition can be excellent in mechanical strength, moldability, and the like.

In some embodiments, the aromatic vinyl-vinyl cyanide copolymer resin may be present in an amount of about 20 parts by weight to about 40 parts by weight, for example, about 25 parts by weight to about 35 parts by weight, relative to about 100 parts by weight of the polycarbonate resin. If the content of the aromatic vinyl-vinyl cyanide copolymer resin is less than about 20 parts by weight relative to about 100 parts by weight of the polycarbonate resin, the thermoplastic resin composition can suffer from deterioration in moldability and the like, whereas, if the content of the aromatic vinyl-vinyl cyanide copolymer resin exceeds about 40 parts by weight relative to about 100 parts by weight of the polycarbonate resin, the thermoplastic resin composition can suffer from deterioration in impact resistance, rigidity, flame retardancy, heat resistance, moldability, and the like.

### (C) Rubber-modified vinyl graft copolymer

The rubber-modified vinyl graft copolymer according to one embodiment of the invention serves to improve properties of the thermoplastic resin composition, such as impact resistance, rigidity, flame retardancy, heat resistance, moldability, balance of properties thereof, and the like, when incorporated in the polycarbonate resin together with the aromatic vinyl-vinyl cyanide copolymer resin, the ethylene-methyl acrylate copolymer, the glass fiber, the brominated epoxy resin, the aromatic phosphate compound, and the like. The rubber-modified vinyl graft copolymer may include a rubber-modified vinyl graft copolymer obtained by graft polymerization of a monomer mixture comprising an aromatic vinyl monomer and an alkyl (meth)acrylate monomer onto a rubber polymer. For example, the rubber-modified vinyl graft copolymer may be obtained by graft polymerization of a monomer mixture comprising an aromatic vinyl monomer, an alkyl (meth)acrylate monomer, and, optionally, a monomer copolymerizable with the aromatic vinyl monomer onto a rubber polymer. Here, graft polymerization of the monomer mixture may be performed by a known polymerization method, such as emulsion polymerization, suspension polymerization, and the like. In addition, the rubber-modified vinyl graft copolymer may have a core (rubber polymer)-shell (copolymer of the monomer mixture) structure, without being limited thereto.

In some embodiments, examples of the rubber polymer may include diene rubbers, such as polybutadiene and poly(acrylonitrile-butadiene), and the like, saturated rubbers obtained by hydrogenation of the diene rubbers, isoprene rubbers, C₂ to C₁₀ alkyl (meth)acrylate rubbers, copolymers of C₂ to C₁₀ alkyl (meth)acrylates and styrene, ethylene-propylene-diene monomer (EPDM) terpolymers, and the like. These may be used alone or as a mixture thereof. For example, the rubber polymer may include diene rubbers, (meth)acrylate rubbers, and the like, specifically, butadiene rubbers, butyl acrylate rubbers, and the like, without being limited thereto.

In some embodiments, the rubber polymer (rubber particles) may have an average particle size of about 0.05 µm to about 6 µm, for example, about 0.15 µm to about 4 µm, specifically about 0.25 µm to about 3.5 µm. Within this range, the thermoplastic resin composition can be excellent in impact resistance, appearance, and the like. Here, the average (z-average) particle size of the rubber polymer (rubber particles) may be measured on a specimen in a latex state by light scattering particle size analysis. Specifically, the average particle size of the rubber polymer may be determined by filtering a latex of the rubber polymer through a mesh to remove coagulant formed during polymerization of the rubber polymer, placing a mixed solution of 0.5 g of the latex and 30 ml of distilled water in a 1,000 ml flask, filling the flask with distilled water to prepare a specimen, transferring 10 ml of the specimen to a quartz cell, and measuring the average particle diameter of rubber particles using a light scattering particle size analyzer (Nano-ZS, Malvern Instruments Ltd.).

In some embodiments, the rubber polymer may be present in an amount of about 20 wt% to about 80 wt%, for example, about 25 wt% to about 70 wt%, based on the total weight of the rubber-modified vinyl graft copolymer. The monomer mixture may be present in an amount of about 20 wt% to about 80 wt%, for example, about 30 wt% to about 75 wt%, based on the total weight of the rubber-modified vinyl graft copolymer. Within these ranges, the thermoplastic resin composition can be excellent in impact resistance, heat resistance, moldability, appearance, and the like.

In some embodiments, the aromatic vinyl monomer is a monomer capable of being graft-copolymerized onto the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinylnaphthalene, and the like. These may be used alone or as a mixture thereof. The aromatic vinyl monomer may be present in an amount of about 10 wt% to about 90 wt%, for example, about 20 wt% to about 80 wt%, based on the total weight of the monomer mixture. Within this range, the thermoplastic resin composition can be excellent in moldability, impact resistance, and the like.

In some embodiments, the alkyl (meth)acrylate monomer is copolymerizable with the aromatic vinyl monomer and may include, for example, methyl methacrylate, methyl acrylate, ethyl acrylate, and the like. These may be used alone or as a mixture thereof. For example, the alkyl (meth)acrylate monomer may include methyl methacrylate. The alkyl (meth)acrylate monomer may be present in an amount of about 10 wt% to about 90 wt%, for example, about 20 wt% to about 80 wt%, based on the total weight of the monomer mixture. Within this range, the thermoplastic resin composition can be excellent in moldability, impact resistance, and the like.

In some embodiments, examples of the monomer copolymerizable with the aromatic vinyl monomer may include a vinyl cyanide monomer, maleic anhydride, and N-substituted maleimide, without being limited thereto. The monomer copolymerizable with the aromatic vinyl monomer may be optionally present in an amount of about 50 wt% or less based on the total weight of the monomer mixture, without being limited thereto.

In some embodiments, examples of the rubber-modified vinyl graft copolymer may include a copolymer (g-MBS) obtained by grafting a styrene monomer, as the aromatic vinyl compound, and methyl methacrylate, as the monomer copolymerizable therewith, onto a butadiene rubber polymer, a copolymer (g-MABS) obtained by grafting a styrene monomer, an acrylonitrile monomer, and methyl methacrylate onto a butadiene rubber polymer, and the like. For example, the rubber-modified vinyl graft copolymer may include g-MBS.

In some embodiments, the rubber-modified vinyl graft copolymer may be present in an amount of about 3 parts by weight to about 15 parts by weight, for example, about 5 parts by weight to about 10 parts by weight, relative to about 100 parts by weight of the polycarbonate resin. If the content of the rubber-modified vinyl graft copolymer is less than about 3 parts by weight relative to about 100 parts by weight of the polycarbonate resin, the thermoplastic resin composition can suffer from deterioration in impact resistance and the like, whereas, if the content of the rubber-modified vinyl graft copolymer exceeds about 15 parts by weight relative to about 100 parts by weight of the polycarbonate resin, the thermoplastic resin composition can suffer from deterioration in rigidity, flame retardancy, heat resistance, and the like.

### (D) Ethylene-methyl acrylate copolymer

The ethylene-methyl acrylate copolymer according to one embodiment of the invention serves to improve properties of the thermoplastic resin composition, such as impact resistance, rigidity, flame retardancy, heat resistance, moldability, balance of properties thereof, and the like, when incorporated in the polycarbonate resin together with the aromatic vinyl-vinyl cyanide copolymer resin, the rubber-modified vinyl graft copolymer, the glass fiber, the brominated epoxy resin, the aromatic phosphate compound, and the like.

In some embodiments, the ethylene-methyl acrylate copolymer may be prepared by polymerization of ethylene and methyl acrylate. For example, the ethylene-methyl acrylate copolymer may comprise about 50 wt% to about 95 wt%, for example, about 70 wt% to about 93 wt%, of an ethylene repeat unit and about 5 wt% to about 50 wt%, for example, about 7 wt% to about 30 wt%, of a methyl acrylate repeat unit. Within this range, the thermoplastic resin composition can be excellent in impact resistance and the like.

In some embodiments, the ethylene-methyl acrylate copolymer may be provided in the form of a random copolymer, a block copolymer, a multi-block copolymer, or a combination thereof.

In some embodiments, the ethylene-methyl acrylate copolymer may have a melt flow index of about 0.01 g/10 min to about 40 g/10 min, for example, about 0.1 g/10 min to about 10 g/10 min, as measured at 190°C under a load of 2.16 kgf in accordance with ASTM D1238.

In some embodiments, the ethylene-methyl acrylate copolymer may be present in an amount of about 0.7 parts by weight to about 3 parts by weight, for example, about 1 parts by weight to about 2.5 parts by weight, relative to about 100 parts by weight of the polycarbonate resin. If the content of the ethylene-methyl acrylate copolymer is less than about 0.7 parts by weight relative to about 100 parts by weight of the polycarbonate resin, the thermoplastic resin composition can suffer from deterioration in impact resistance and the like, whereas, if the content of the ethylene-methyl acrylate copolymer exceeds about 3 parts by weight relative to about 100 parts by weight of the polycarbonate resin, the thermoplastic resin composition can suffer from deterioration in flame retardancy and the like.

In some embodiments, a weight ratio of the rubber-modified vinyl graft copolymer to the ethylene-methyl acrylate copolymer (rubber-modified vinyl graft copolymer:ethylene-methyl acrylate copolymer) may range from about 1:0.1 to about 1:0.7, for example, about 1:0.1 to about 1:0.5, specifically about 1:0.14 to about 1:0.36. Within this range, the thermoplastic resin composition can be more excellent in impact resistance, moldability, and the like.

### (E) Glass fiber

The glass fiber according to one embodiment of the invention serves to improve properties of the thermoplastic resin composition, such as impact resistance, rigidity, flame retardancy, heat resistance, moldability, balance of properties thereof, and the like, when incorporated in the polycarbonate resin together with the aromatic vinyl-vinyl cyanide copolymer resin, the rubber-modified vinyl graft copolymer, the ethylene-methyl acrylate copolymer, the brominated epoxy resin, the aromatic phosphate compound, and the like.

In some embodiments, the glass fiber may include circular cross-sectional glass fiber, flat-shaped glass fiber, a combination thereof, and the like.

In some embodiments, the circular cross-sectional glass fiber may have an average cross-sectional diameter of about 5 µm to about 15 µm, for example, about 6 µm to about 14 µm, as measured using an optical microscope. Within this range, the thermoplastic resin composition can be excellent in rigidity, impact resistance, and the like.

In some embodiments, the flat-shaped glass fiber may have a cross-sectional aspect ratio of about 1.5 to about 4, for example, about 2 to about 4, and a minor axis length of about 6 µm to about 10 µm, for example, about 6 µm to about 9 µm, as measured using an optical microscope. Within this range, the thermoplastic resin composition can be excellent in rigidity, impact resistance, and the like.

In some embodiments, the glass fiber may have an average pre-extrusion length of about 1 mm to about 5 mm and an average post-extrusion (post-processing) length of about 100 µm to about 700 µm, for example, about 110 µm to about 690 µm. Within this range, the thermoplastic resin composition can be excellent in impact resistance, rigidity, appearance, and the like.

In some embodiments, the glass fiber may be subjected to surface treatment with an epoxy sizing agent to increase bonding strength to the other components. The epoxy sizing agent may include an epoxy resin, a modified epoxy resin, a hydrogenated modified epoxy resin, combinations thereof, and the like, without being limited thereto.

In some embodiments, the epoxy sizing agent may be present in an amount of about 0.1 wt% to about 10 wt%, for example, about 0.1 wt% to about 5 wt%, based on the total weight of the glass fiber surface-treated with the epoxy sizing agent. Within this range, the thermoplastic resin composition can be excellent in impact resistance, rigidity, moldability, and the like.

In some embodiments, the glass fiber may be present in an amount of about 20 parts by weight to about 50 parts by weight, for example, about 25 parts by weight to about 40 parts by weight, relative to about 100 parts by weight of the polycarbonate resin. If the content of the glass fiber is less than about 20 parts by weight relative to about 100 parts by weight of the polycarbonate resin, the thermoplastic resin composition can suffer from deterioration in rigidity, moldability, and the like, whereas, if the content of the glass fiber exceeds about 50 parts by weight relative to about 100 parts by weight of the polycarbonate resin, the thermoplastic resin composition can suffer from deterioration in impact resistance, flame retardancy, moldability, and the like.

### (F) Brominated epoxy resin

The brominated epoxy resin according to one embodiment of the present invention serves to improve properties of the thermoplastic resin composition, such as impact resistance, rigidity, flame retardancy, heat resistance, moldability, balance of properties thereof, and the like, when incorporated in the polycarbonate resin together with the aromatic vinyl-vinyl cyanide copolymer resin, the rubber-modified vinyl graft copolymer, the ethylene-methyl acrylate copolymer, the glass fiber, the aromatic phosphate compound, and the like. The brominated epoxy resin may include a commercially available brominated epoxy resin used in typical thermoplastic resin compositions.

In some embodiments, the brominated epoxy resin may have a bromine content of about 20 wt% to about 80 wt%, for example, about 30 wt% to about 60 wt%, based on the total weight of the brominated epoxy resin. Within this range, the thermoplastic resin composition can be excellent in flame retardancy, heat resistance, and the like.

In some embodiments, the brominated epoxy resin may have a weight average molecular weight (Mw) of about 15,000 g/mol to about 25,000 g/mol, as measured by gel permeation chromatography (GPC). Within this range, the thermoplastic resin composition can be excellent in flame retardancy, thermal stability, moldability, and the like.

In some embodiments, the brominated epoxy resin may be present in an amount of about 10 parts by weight to about 40 parts by weight, for example, about 15 parts by weight to about 35 parts by weight, relative to about 100 parts by weight of the polycarbonate resin. If the content of the brominated epoxy resin is less than about 10 parts by weight relative to about 100 parts by weight of the polycarbonate resin, the thermoplastic resin composition can suffer from deterioration in flame retardancy and the like, whereas, if the content of the brominated epoxy resin exceeds about 40 parts by weight relative to about 100 parts by weight of the polycarbonate resin, the thermoplastic resin composition can suffer from deterioration in impact resistance and the like.

### (G) Aromatic phosphate compound

The aromatic phosphate compound according to one embodiment of the present invention serves to improve properties of the thermoplastic resin composition, such as impact resistance, rigidity, flame retardancy, heat resistance, moldability, balance of properties thereof, and the like, when incorporated in the polycarbonate resin together with the aromatic vinyl-vinyl cyanide copolymer resin, the rubber-modified vinyl graft copolymer, the ethylene-methyl acrylate copolymer, the glass fiber, the brominated epoxy resin, and the like. The aromatic phosphate compound may include an aromatic phosphate compound comprising a resorcinol-derived unit.

In some embodiments, the aromatic phosphate compound comprising the resorcinol-derived unit may include resorcinol-di(bis-2,6-dimethylphenyl) phosphate, resorcinol bis(diphenyl phosphate), resorcinol di[bis(2,4-di-tert-butylphenyl) phosphate], combinations thereof, and the like.

In some embodiments, the aromatic phosphate compound may be present in an amount of about 0.5 parts by weight to about 3 parts by weight, for example, about 1 parts by weight to about 2.5 parts by weight, relative to about 100 parts by weight of the polycarbonate resin. If the content of the aromatic phosphate compound is less than about 0.5 parts by weight relative to about 100 parts by weight of the polycarbonate resin, the thermoplastic resin composition can suffer from deterioration in flame retardancy, flowability, and the like, whereas, if the content of the aromatic phosphate compound exceeds about 3 parts by weight relative to about 100 parts by weight of the polycarbonate resin, the thermoplastic resin composition can suffer from deterioration in impact resistance and the like.

In some embodiments, a weight ratio of the brominated epoxy resin to the aromatic phosphate compound (brominated epoxy resin:aromatic phosphate compound) may range from about 1:0.02 to about 1:0.25, for example, about 1:0.04 to about 1:0.11. Within this range, the thermoplastic resin composition can be more excellent in flame retardancy, flowability, and the like.

The thermoplastic resin composition according to one embodiment of the present invention may further include additives used in typical thermoplastic resin compositions. Examples of the additives may include antioxidants, anti-dripping agents, lubricants, release agents, nucleating agents, antistatic agents, stabilizers, dyes, pigments, mixtures thereof, and the like, without being limited thereto. The additives may be optionally present in an amount of about 0.001 parts by weight to about 40 parts by weight, for example, about 0.1 parts by weight to about 10 parts by weight, relative to about 100 parts by weight of the polycarbonate resin.

The thermoplastic resin composition according to one embodiment of the present invention may be prepared in pellet form by mixing the aforementioned components, followed by melt extrusion in a typical twin-screw extruder at about 230°C to about 300°C, for example, about 240°C to about 290°C.

The thermoplastic resin composition may have a notched Izod impact strength of about 3.7 kgf·cm/cm to about 20 kgf·cm/cm, for example, about 4 kgf·cm/cm to about 15 kgf·cm/cm, as measured on a 1/8" thick specimen in accordance with ASTM D256.

In some embodiments, the thermoplastic resin composition may have a falling dart impact (FDI) strength of about 7 J to about 20 J, for example, about 7.5 J to about 17 J, as measured on a 3.2 mm thick specimen by dropping a 7 kg dart from a height of 1 m in accordance with the DuPont drop test method.

In some embodiments, the thermoplastic resin composition may have a tensile strength of about 1,000 MPa to about 2,000 MPa, for example, about 1,040 MPa to about 1,900 MPa, as measured on a 4 mm thick specimen under conditions of 5 mm/min in accordance with ISO 527.

In some embodiments, the thermoplastic resin composition may have a flame retardancy of V-1 or higher, as measured on a 1.5 mm thick injection-molded specimen by the UL-94 vertical flame retardancy test method.

In some embodiments, the thermoplastic resin composition may have a heat deflection temperature (HDT) of about 115°C to about 160°C, for example, about 118°C to about 150°C, as measured on a 6.4 mm thick specimen under conditions of 1.82 MPa and a heating rate of 120°C/hr in accordance with ASTM D648.

In some embodiments, the thermoplastic resin composition may have a spiral flow length of about 200 mm to about 450 mm, for example, about 220 mm to about 430 mm, as measured on a specimen prepared by injection molding in a spiral mold having a width of 15 mm and a thickness of 2 mm under conditions of a molding temperature of 240°C, a mold temperature of 60°C, an injection pressure of 1,000 MPa, and an injection rate of 60 mm/s.

A molded article according to the present invention is formed of the thermoplastic resin composition as set forth above. The thermoplastic resin composition may be prepared in pellet form. The prepared pellets may be manufactured into various molded articles (products) by various molding methods, such as injection molding, extrusion molding, vacuum molding, casting, and the like. These molding methods are well known to a person having ordinary knowledge in the art to which the present invention pertains.

In some embodiments, the molded article is useful for use as a battery tray, a battery pallet, a mobile tray, and the like due to being excellent in impact resistance, rigidity, flame retardancy, heat resistance, moldability, balance of properties thereof, and the like.

In some embodiments, the battery tray may be an injection-molded article having a size of about 100 mm to about 800 mm × about 100 mm to about 700 mm × about 100 mm to about 500 mm.

### [Mode for Invention]

Next, the present invention will be described in more detail with reference to some examples. However, it should be noted that these examples are provided for illustration only and are not to be construed in any way as limiting the present invention.

### EXAMPLE

Details of components used in Examples and Comparative Examples are as follows:
(A) Polycarbonate resin
   A bisphenol-A polycarbonate resin (manufacturer: Lotte Chemical Co., Ltd., weight average molecular weight: about 25,000 g/mol) was used.
(B) Aromatic vinyl-vinyl cyanide copolymer resin
   A SAN resin (manufacturer: Lotte Chemical Co., Ltd., weight average molecular weight: about 100,000 g/mol) prepared by polymerization of 75 wt% of styrene and 25 wt% of acrylonitrile was used.
(C) Rubber-modified vinyl graft copolymer
   (C1) A rubber-modified vinyl graft copolymer (g-MBS, product name: EXL 2616, manufacturer: Dow Inc.) prepared by graft-copolymerization of a monomer mixture comprising styrene and methyl methacrylate onto butadiene rubber having an average particle size of 0.15 µm was used.
   (C2) A core-shell type graft copolymer (g-ABS, manufacturer: Lotte Chemical Co., Ltd.) prepared by graft copolymerization of 42 wt% of styrene and acrylonitrile (weight ratio: 75/25) onto 58 wt% of a butadiene rubber having an average particle size of 0.3 µm was used.
(D) Ethylene-methyl acrylate copolymer
   An ethylene-methyl acrylate copolymer (EMA, product name: ELVALOY 1330AC, manufacturer: Dow Inc.) was used.
(E) Glass Fiber:
   Glass fiber (surface-treated with an epoxy sizing agent, product name: ECS-03T-187H, manufacturer: Nitto Boseki Co., Ltd.) was used.
(F) Brominated epoxy resin
   A brominated epoxy resin (product name: CXB-2000H, manufacturer: Woojin Polymer Co., Ltd.) was used.
(G) Aromatic phosphate compound
   (G1) Resorcinol-di(bis-2,6-dimethylphenyl) phosphate (product name: PX-200, manufacturer: DAIHACHI Chemical Industry Co., Ltd.) was used.
   (G2) An oligomeric bisphenol-A diphosphate (product name: YOKE BDP, manufacturer: Yoke Chemical Co., Ltd.) was used.

### Examples 1 to 13 and Comparative Examples 1 to 14

The aforementioned components were mixed in amounts as listed in Tables 1, 2, 3, and 4, followed by extrusion at 250°C, thereby preparing a thermoplastic resin composition in pellet form. Here, extrusion was performed using a twin-screw extruder (L/D: 44, diameter: 45 mm). The prepared pellets were dried at 80°C for 4 hours or more, followed by injection molding using a 6 oz. injection molding machine (molding temperature: about 250°C, mold temperature: about 60°C), thereby preparing a specimen. The prepared specimen was evaluated as to the following properties. Results are shown in Tables 1, 2, 3, and 4.

### Property evaluation

(1) Notched Izod impact strength (unit: kgf·cm/cm): Notched Izod impact strength was measured on a 1/8" thick specimen in accordance with ASTM D256.
(2) FDI Impact Strength (unit: J): Falling dart impact (FDI) strength was measured on a 3.2 mm thick specimen by dropping a 7 kg dart from a height of 1 m in accordance with the DuPont drop test method.
(3) Tensile strength (unit: MPa): Tensile strength was measured on a 4 mm thick specimen under conditions of 5 mm/min in accordance with ISO 527.

Flame retardancy: Flame retardancy was measured on a 1.5 mm thick injection-molded specimen by the UL-94 vertical flame retardancy test method.

Heat deflection temperature (unit: °C): Heat deflection temperature (HDT) was measured on a 6.4 mm thick specimen under conditions of 1.82 MPa and a heating rate of 120°C/hr in accordance with ASTM D648.

Spiral flow length (unit: mm): Spiral flow length was measured on a specimen prepared by injection molding in a spiral mold having a width of 15 mm and a thickness of 2 mm under conditions of a molding temperature of 240°C, a mold temperature of 60°C, an injection pressure of 1,000 MPa, and an injection rate of 60 mm/s.

**Table 1**

| | Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 25 | 30 | 35 | 30 | 30 | 30 | 30 |
| (C1) (parts by weight) | 7 | 7 | 7 | 5 | 10 | 7 | 7 |
| (C2) (parts by weight) | - | - | - | - | - | - | - |
| (D) (parts by weight) | 1.6 | 1.6 | 1.6 | 1.6 | 1.6 | 1 | 2.5 |
| (E) (parts by weight) | 36 | 36 | 36 | 36 | 36 | 36 | 36 |
| (F) (parts by weight) | 24 | 24 | 24 | 24 | 24 | 24 | 24 |
| (G1) (parts by weight) | 1.6 | 1.6 | 1.6 | 1.6 | 1.6 | 1.6 | 1.6 |
| (G2) (parts by weight) | - | - | - | - | - | - | - |
| Notched Izod impact strength (kgf·cm/cm) | 7.5 | 6.7 | 5.0 | 6.0 | 7.5 | 5.8 | 6.2 |
| FDI strength (J) | 12.8 | 12.2 | 10.5 | 11.5 | 13.5 | 11.5 | 12.5 |
| Tensile strength (MPa) | 1,250 | 1,200 | 1,100 | 1,150 | 1,100 | 1,150 | 1,050 |
| Flame retardancy | V-0 | V-0 | V-1 | V-0 | V-1 | V-0 | V-1 |
| Heat deflection temperature (°C) | 140 | 130 | 120 | 133 | 125 | 128 | 123 |
| Spiral flow length (mm) | 320 | 360 | 400 | 370 | 300 | 370 | 385 |

**Table 2**

| | Example | | | | | |
|---|---|---|---|---|---|---|
| | 8 | 9 | 10 | 11 | 12 | 13 |
| (A) (parts by weight) | 100 | 100 | 100 | 100 | 100 | 100 |
| (B) (parts by weight) | 30 | 30 | 30 | 30 | 30 | 30 |
| (C1) (parts by weight) | 7 | 7 | 7 | 7 | 7 | 7 |
| (C2) (parts by weight) | - | - | - | - | - | - |
| (D) (parts by weight) | 1.6 | 1.6 | 1.6 | 1.6 | 1.6 | 1.6 |
| (E) (parts by weight) | 25 | 40 | 36 | 36 | 36 | 36 |
| (F) (parts by weight) | 24 | 24 | 15 | 35 | 24 | 24 |
| (G1) (parts by weight) | 1.6 | 1.6 | 1.6 | 1.6 | 1 | 2.5 |
| (G2) (parts by weight) | - | - | - | - | - | - |
| Notched Izod impact strength (kgf·cm/cm) | 8.5 | 4.0 | 7.0 | 6.8 | 8.0 | 6.8 |
| FDI strength (J) | 14.0 | 8.0 | 11.3 | 9.5 | 12.3 | 11.2 |
| Tensile strength (MPa) | 1,050 | 1,800 | 1,150 | 1,150 | 1,200 | 1,200 |
| Flame retardancy | V-0 | V-1 | V-1 | V-0 | V-1 | V-0 |
| Heat deflection temperature (°C) | 120 | 145 | 131 | 132 | 130 | 126 |
| Spiral flow length (mm) | 400 | 250 | 320 | 380 | 350 | 380 |

**Table 3**

| | Comparative Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 15 | 45 | 30 | 30 | 30 | 30 | 30 |
| (C1) (parts by weight) | 7 | 7 | 1 | 16 | - | 7 | 7 |
| (C2) (parts by weight) | - | - | - | - | 7 | - | - |
| (D) (parts by weight) | 1.6 | 1.6 | 1.6 | 1.6 | 1.6 | 0.5 | 4 |
| (E) (parts by weight) | 36 | 36 | 36 | 36 | 36 | 36 | 36 |
| (F) (parts by weight) | 24 | 24 | 24 | 24 | 24 | 24 | 24 |
| (G1) (parts by weight) | 1.6 | 1.6 | 1.6 | 1.6 | 1.6 | 1.6 | 1.6 |
| (G2) (parts by weight) | - | - | - | - | - | - | - |
| Notched Izod impact strength (kgf·cm/cm) | 8.0 | 3.0 | 3.5 | 10.0 | 5.0 | 3.5 | 7.5 |
| FDI strength (J) | 13.0 | 6.5 | 4.0 | 16.0 | 6.0 | 6.0 | 13.0 |
| Tensile strength (MPa) | 1,280 | 950 | 1,250 | 900 | 1,250 | 1,180 | 1,000 |
| Flame retardancy | V-0 | V-2 | V-0 | Fail | V-1 | V-0 | Fail |
| Heat deflection temperature (°C) | 145 | 110 | 135 | 110 | 130 | 130 | 120 |
| Spiral flow length (mm) | 180 | 490 | 380 | 270 | 340 | 365 | 420 |

**Table 4**

| | Comparative Example | | | | | | |
|---|---|---|---|---|---|---|---|
| | 8 | 9 | 10 | 11 | 12 | 13 | 14 |
| (A) (parts by weight) | 100 | 100 | 100 | 100 | 100 | 100 | 100 |
| (B) (parts by weight) | 30 | 30 | 30 | 30 | 30 | 30 | 30 |
| (C1) (parts by weight) | 7 | 7 | 7 | 7 | 7 | 7 | 7 |
| (C2) (parts by weight) | - | - | - | - | - | - | - |
| (D) (parts by weight) | 1.6 | 1.6 | 1.6 | 1.6 | 1.6 | 1.6 | 1.6 |
| (E) (parts by weight) | 15 | 55 | 36 | 36 | 36 | 36 | 36 |
| (F) (parts by weight) | 24 | 24 | 5 | 45 | 24 | 24 | 24 |
| (G1) (parts by weight) | 1.6 | 1.6 | 1.6 | 1.6 | 0.1 | 4 | - |
| (G2) (parts by weight) | - | - | - | - | - | - | 1.6 |
| Notched Izod impact strength (kgf·cm/cm) | 9.5 | 3.0 | 7.4 | 3.5 | 8.5 | 3.5 | 6.5 |
| FDI strength (J) | 14.5 | 4.0 | 11.5 | 6.0 | 13.0 | 10.5 | 10.5 |
| Tensile strength (MPa) | 800 | 2,100 | 1,100 | 1,050 | 1,250 | 1,100 | 1,200 |
| Flame retardancy | V-0 | Fail | V-2 | V-0 | V-2 | V-0 | V-2 |
| Heat deflection temperature (°C) | 115 | 150 | 130 | 133 | 133 | 124 | 126 |
| Spiral flow length (mm) | 480 | 150 | 315 | 400 | 360 | 380 | 380 |

From the above results, it was confirmed that the thermoplastic resin compositions according to the invention exhibited excellent impact resistance (notched Izod impact strength, FDI strength), rigidity (tensile strength), flame retardancy (flame retardancy rating), heat resistance (heat deflection temperature), moldability (spiral flow length), and the like.

Conversely, it was confirmed that the thermoplastic resin composition according to Comparative Example 1, prepared using an insufficient amount of the aromatic vinyl-vinyl cyanide copolymer resin, suffered from deterioration in moldability and the like; the thermoplastic resin composition according to Comparative Example 2, prepared using an excess of the aromatic vinyl-vinyl cyanide copolymer resin, suffered from deterioration in impact resistance, rigidity, flame retardancy, heat resistance, moldability, and the like; the thermoplastic resin composition according to Comparative Example 3, prepared using an insufficient amount of the rubber-modified vinyl graft copolymer according to the invention, suffered from deterioration in impact resistance and the like; the thermoplastic resin composition according to Comparative Example 4, prepared using an excess of the rubber-modified vinyl graft copolymer according to the invention, suffered from deterioration in rigidity, flame retardancy, heat resistance, and the like; and the thermoplastic resin composition according to Comparative Example 5, prepared using g-ABS (C2) instead of the rubber-modified vinyl graft copolymer according to the invention, suffered from deterioration in impact resistance and the like. In addition, it was confirmed that the thermoplastic resin composition according to Comparative Example 6, prepared using an insufficient amount of the ethylene-methyl acrylate copolymer, suffered from deterioration in impact resistance and the like; the thermoplastic resin composition according to Comparative Example 7, prepared using an excess of the ethylene-methyl acrylate copolymer, suffered from deterioration in flame retardancy and the like; the thermoplastic resin composition according to Comparative Example 8, prepared using an insufficient amount of the glass fiber, suffered from deterioration in rigidity, moldability, and the like; the thermoplastic resin composition according to Comparative Example 9, prepared using an excess of the glass fiber, suffered from deterioration in impact resistance, flame retardancy, moldability, and the like; the thermoplastic resin composition according to Comparative Example 10, prepared using an insufficient amount of the brominated epoxy resin, suffered from deterioration in flame retardancy and the like; and the thermoplastic resin composition according to Comparative Example 11, prepared using an excess of the brominated epoxy resin, suffered from deterioration in impact resistance and the like. Furthermore, it was confirmed that the thermoplastic resin composition according to Comparative Example 12, prepared using an insufficient amount of the aromatic phosphate compound according to the invention, suffered from deterioration in flame retardancy and the like; the thermoplastic resin composition according to Comparative Example 13, prepared using an excess of the aromatic phosphate compound according to the invention, suffered from deterioration in impact resistance and the like; and the thermoplastic resin composition according to Comparative Example 14, prepared using oligomeric bisphenol-A diphosphate (G2) instead of the aromatic phosphate compound according to the invention, suffered from deterioration in flame retardancy and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a polycarbonate resin;
about 20 parts by weight to about 40 parts by weight of an aromatic vinyl-vinyl cyanide copolymer resin;
about 3 parts by weight to about 15 parts by weight of a rubber-modified vinyl graft copolymer prepared by graft polymerization of a monomer mixture comprising an aromatic vinyl monomer and an alkyl (meth)acrylate monomer onto a rubber polymer;
about 0.7 parts by weight to about 3 parts by weight of an ethylene-methyl acrylate copolymer;
about 20 parts by weight to about 50 parts by weight of glass fiber;
about 10 parts by weight to about 40 parts by weight of a brominated epoxy resin; and
about 0.5 parts by weight to about 3 parts by weight of an aromatic phosphate compound comprising a resorcinol-derived unit.

2. The thermoplastic resin composition according to claim 1, wherein the glass fiber is subjected to surface treatment with an epoxy sizing agent.

3. The thermoplastic resin composition according to claim 1 or 2, wherein the brominated epoxy resin has a bromine content of about 20 wt% to about 80 wt%.

4. The thermoplastic resin composition according to any one of claims 1 to 3, wherein the brominated epoxy resin has a weight average molecular weight (Mw) of about 15,000 g/mol to about 25,000 g/mol, as measured by gel permeation chromatography (GPC).

5. The thermoplastic resin composition according to any one of claims 1 to 4, wherein the aromatic phosphate compound comprising the resorcinol-derived unit comprises at least one of resorcinol-di(bis-2,6-dimethylphenyl) phosphate, resorcinol bis(diphenyl phosphate), and resorcinol di[bis(2,4-di-tert-butylphenyl) phosphate].

6. The thermoplastic resin composition according to any one of claims 1 to 5, wherein a weight ratio of the rubber-modified vinyl graft copolymer to the ethylene-methyl acrylate copolymer ranges from about 1:0.1 to about 1:0.7.

7. The thermoplastic resin composition according to any one of claims 1 to 6, wherein a weight ratio of the brominated epoxy resin to the aromatic phosphate compound ranges from about 1:0.02 to about 1:0.25.

8. The thermoplastic resin composition according to any one of claims 1 to 7, wherein the thermoplastic resin composition has a notched Izod impact strength of about 3.7 kgf·cm/cm to about 20 kgf·cm/cm, as measured on a 1/8" thick specimen in accordance with ASTM D256.

9. The thermoplastic resin composition according to any one of claims 1 to 8, wherein the thermoplastic resin composition has a falling dart impact (FDI) strength of about 7 J to about 20 J, as measured on a 3.2 mm thick specimen by dropping a 7 kg dart from a height of 1 m in accordance with the DuPont drop test method.

10. The thermoplastic resin composition according to any one of claims 1 to 9, wherein the thermoplastic resin composition has a tensile strength of about 1,000 MPa to about 2,000 MPa, as measured on a 4 mm thick specimen under conditions of 5 mm/min in accordance with ISO 527.

11. The thermoplastic resin composition according to any one of claims 1 to 10, wherein the thermoplastic resin composition has a flame retardancy of V-1 or higher, as measured on a 1.5 mm thick injection-molded specimen using the UL-94 vertical flame retardancy test method.

12. The thermoplastic resin composition according to any one of claims 1 to 11, wherein the thermoplastic resin composition has a heat deflection temperature (HDT) of about 115°C to about 160°C, as measured on a 6.4 mm thick specimen under conditions of 1.82 MPa and a heating rate of 120°C/hr in accordance with ASTM D648.

13. The thermoplastic resin composition according to any one of claims 1 to 12, wherein the thermoplastic resin composition has a spiral flow length of about 200 mm to about 450 mm, as measured on a specimen prepared by injection molding in a spiral mold having a width of 15 mm and a thickness of 2 mm under conditions of a molding temperature of 240°C, a mold temperature of 60°C, an injection pressure of 1,000 MPa, and an injection rate of 60 mm/s.

14. A molded article formed of the thermoplastic resin composition according to any one of claims 1 to 13.

15. A battery tray formed of the thermoplastic resin composition according to any one of claims 1 to 13, the battery tray being an injection-molded article having a size of about 100 mm to about 800 mm × about 100 mm to about 700 mm × about 100 mm to about 500 mm.
